# EUROPÄISCHE PATENTANMELDUNG

(11) **EP 2 127 750 A2**
(43) Veröffentlichungstag der Anmeldung: **02.12.2009**
(21) Anmeldenummer: 09011241.8
(22) Anmeldetag: 06.05.2008
(51) Int. Cl.: B01L 3/14, B65D 47/28

(54) **Verschluss für einen Behälter zur Aufnahme von flüssigen Proben und Behälter mit einem solchen**

(62) Teilanmeldung aus: 08008485.8
(71) Anmelder: Qiagen GmbH, 40724 Hilden (DE)
(72) Erfinder: Die Erfindernennung liegt noch nicht vor
(74) Vertreter: Patentanwälte Buse, Mentzel, Ludewig

(57) **Zusammenfassung**

Die Erfindung bezieht sich auf einen Verschluss (10) für einen Behälter (20) zur Aufnahme von Proben, insbesondere von biologischen Proben sowie auf einen Behälter (20) mit einem solchen Verschluss (10). Der Behälter (20) ist zur Einbringung in eine Untersuchungseinrichtung (30) bestimmt. Der Verschluss (10) ist auf den Behälter (20) montierbar und weist wenigstens ein, in Bezug auf den Behälter (20), bewegliches Element auf, im Weiteren Loselement (40.1, 40.2, 40.3', 40.3") genannt. Der Verschluss (10) besitzt eine Schließlage, in welcher er den Behälter (20) verschließt, um die Probe gegenüber der Umgebung zu sichern und weiterhin eine Offenlage, in der die Probe zugänglich ist. Auch in seiner Offenlage verbleibt der Verschluss (10) auf dem Behälter (20). Weiterhin weist der Verschluss (10) Mittel auf, welche mit an der Untersuchungseinrichtung (30) befindlichen Betätigungsteilea (31, 70, 71) in Wirkverbindung bringbar sind. Der Verschluss (10) ist durch diese Mittel sowie durch die Betätigungsteile (31, 70, 71) der Untersuchungseinrichtung (30) reversibel in seiner Offenlage überführbar, (Fig. 6).

## Beschreibung

Die Erfindung betrifft einen Verschluss für einen Behälter der im Oberbegriff des Anspruches 1 angegebenen Art. Weiterhin betrifft die Vorrichtung einen Behälter mit einem erfindungsgemäßen Verschluss.

Solche Behälter werden insbesondere im Analysebereich verwendet, wo verschiedene Proben, insbesondere biologisches Probenmaterial, wie Blut, Urin, Liquor, Speichel aber auch Gewebeproben etc., untersucht werden. Hierbei handelt es sich vorzugsweise um flüssige oder fließfähige resp. lysierte und/oder in Lösung befindliche Proben(-materialien). Die Probenbehälter werden üblicherweise verschlossen gehalten, um einerseits die darin enthaltene Probe zu schützen, andererseits jedoch auch Personen, die die Proben handhaben müssen, vor eventuellen Infektionen zu bewahren. Verwendet man nun herkömmliche Deckel, so müssen diese vor der Untersuchung der Probe entfernt werden. Hierbei besteht die Gefahr, dass etwas von der Probe verschüttet oder verspritzt werden kann, wodurch die Infektionsgefahr, aber auch die Gefahr von Kontaminationen deutlich erhöht wird. Auch kann es vorkommen, dass nach der durchgeführten Untersuchung die Deckel der Probenröhrchen vertauscht werden, was ebenfalls zu vermeiden ist, da hierdurch die Proben vermischt werden und die Untersuchungsergeboisse verfälscht werden können.

Heutzutage ist es üblich, dass die Untersuchungen von vollautomatischen Untersuchungseinrichtungen vorgenommen werden, wobei die Bedienperson lediglich die Probenbehälter in die Untersuchungseinrichtung bringen muss und die Untersuchungsergebnisse sowie die Behälter mit den untersuchten Proben am Ende wieder entnehmen muss.

Das Dokument DE 76 10 107 beschreibt einen Stopfen für ein Probenröhrchen mit einem Ober- und einem Unterteil, welche jeweils mit einer Bohrung versehen sind. Durch Drehung des Ober- und Unterteiles gegeneinander kann das Probenröhrchen geöffnet oder verschlossen werden. Nachteilig hierbei ist jedoch, dass das Öffnen bzw. Schließen manuell erfolgen muss. Dies bedeutet einen erhöhten Arbeitsaufwand für die Bedienperson.

Im Dokument DE 32 01 691 A1 wird ebenfalls ein Stopfen für das Verschließen von Blutprobenröhrchen beschrieben. Der Stopfendeckel weist an seiner Innenseite einen umlaufenden Wulst auf sowie an seiner Außenseite einen ringförmigen Ansatz mit einer parallel zum Deckel liegenden Hinterschneidung. In diesen Ansatz wird eine Verschlussscheibe eingesetzt. Sowohl der Deckel als auch die Verschlussscheibe weisen mehrere Öffnungen auf, wobei durch Drehung der Verschlussscheibe die Öffnungen im Deckel verschlossen oder geöffnet werden können. Auch dieser Stopfen ist durch die Untersuchungseinrichtung selbst nicht drehbar und muss somit manuell geöffnet werden. Außerdem ist der Aufbau kompliziert, was den Stopfen teuer macht.

Aufgabe der Erfindung ist es daher, einen Verschluss für einen Probenbehälter zu schaffen, welcher von der Untersuchungseinrichtung betätigbar ist und bei welchem Kontaminationen sowie Verunreinigungen der Proben bzw. der Untersuchungseinrichtung vermieden werden. Weiterhin ist es Aufgabe der Erfindung, einen Behälter zu schaffen, dessen Deckel von der Untersuchungseinrichtung betätigt werden kann. Diese Aufgabe wird durch die kennzeichnenden Merkmale der Ansprüche 1 und 18 gelöst, denen folgende besondere Bedeutung zukommt.

Der Verschluss besitzt Mittel, welche mit den an der Untersuchungseinrichtung befindlichen Betätigungsteilen in Wirkverbindung bringbar ist. Durch das Zusammenwirken der Mittel und der Betätigungsteile der Untersuchungseinrichtung ist der Verschluss reversibel in seine Offenlage überführbar. Hieraus ergibt sich beispielsweise der Vorteil, dass eine Bedienperson, die mit der Untersuchung von Proben mittels einer Untersuchungseinrichtung beauftragt ist, die mit dem Verschluss versehenen Behälter lediglich der Untersuchungseinrichtung zuführen muss. Das Öffnen der Behälter geschieht dann automatisch durch die Untersuchungseinrichtung. Hierdurch wird der Arbeitsaufwand für die Bedienperson verringert und das Risiko von Kontaminationen und Verschmutzungen weiter minimiert. Dadurch dass der Verschluss reversibel in seiner Offenlage überführt werden kann ist es auch möglich, ihn danach wieder in seine Schließlage, zu bringen. Dies dient weiterhin dem Schutz vor Kontaminationen, verhindert aber auch Verunreinigungen der Probe, falls beispielsweise noch weitere Untersuchungen zu einem späteren Zeitpunkt bzw. in einem anderen Gerät durchgeführt werden sollen. Falls die Untersuchungen abgeschlossen sind, kann der Behälter gegebenenfalls mit den Resten der Probe und dem Verschluss direkt der Entsorgung zugefügt werden, ohne dass hier ein weiteres Risiko durch Verschmutzungen entsteht.

Der erfindungsgemäße Behälter ist mit dem soeben beschriebenen Verschluss versehen. Hierdurch entstehen die beschriebenen Vorteile für die Handhabung des Behälters.

In einer besonders bevorzugten Ausführungsform wird der Verschluss durch die Untersuchungseinrichtung mittelbar oder unmittelbar wieder in seine Schließlage überführt. Die Bedienperson braucht dann nur noch nach der Untersuchung den Behälter wieder zu entnehmen, ohne sich um das Überführen in die Schließlage zu kümmern. In diesem Zusammenhang bedeutet "unmittelbar", dass die Untersuchungseinrichtung durch die selben oder andere Betätigungsteile aktiv den Verschluss wieder in die Schließlage überführt. Bei einer mittelbaren Überführung des Verschlusses in die Schließlage geschieht dies durch das Weglassen von durch die Untersuchungseinrichtung herbeigeführten äußeren Umständen.

Ein Beispiel hierfür ist eine Federbelastung des bzw. der Loselemente. Vor dem Einführen in die Untersuchungseinrichtung ist der Verschluss in seiner Schließlage. Die Loselemente werden in dieser Position durch eine Federbelastung gehalten. Die Untersuchungseinrichtung wirkt nunmehr auf die Loselemente entgegen ihrer Federbelastung ein und überführt den Verschluss so in seine Offenlage. Nach der Entnahme von Probenmaterial aus dem Behälter durch die Untersuchungseinrichtung hören die Betätigungsteile der Untersuchungseinrichtung auf gegen die Federkraft zu wirken. Durch die Federbelastung der Loselemente wird der Verschluss nunmehr wieder in seine Schließlage überführt. Da dies nicht aktiv durch die Untersuchungseinrichtung erfolgt, sondern vielmehr durch das außer Wirkverbindung bringen der Betätigungsteile der Untersuchungseinriehtung, erfolgt die Überführung in die Schließlage mittelbar. Die Federbelastung kann durch herkömmliche Federn wie Schraubenfedern, Schenkelfedern usw. oder auch durch andere elastische Elemente, beispielsweise aus einem Gummi, einem Elastomer oder einem Schaumstoff, herbeigeführt werden. Weitere Beispiele hierzu werden im Folgenden noch ausgeführt.

Der ebenfalls von der Erfindung umfasste Behälter dient der Aufnahme von flüssigen, insbesondere biologischen Proben, der zur Einbringung in eine Untersuchungseinrichtung bestimmt ist. Behälter und Verschluss bilden hierbei beispielsweise eine Baueinheit. Diese Teile können einteilig oder mehrteilig ausgeführt sein. Der Verschluss kann durch eine lösbare Verbindung, beispielsweise eine Schraubverbindung oder Clipsverbindung, am Behälter befestigt werden. Eine nicht lösbare Verbindung ist jedoch ebenfalls möglich.

Weitere Vorteile und Ausführungsformen der Erfindung ergeben sich aus der weiteren Beschreibung, den Unteransprüchen und den Zeichnungen. Es zeigen:
- Fig. 1: eine erste Ausführungsform eines erfindungsgemäßen Verschlusses in Offenlage in Draufsicht,
- Fig.2: der Verschluss aus Fig. 1 während des Überfuhrens von Offenlage in Schließlage,
- Fig. 3: der Verschluss aus Fig. 1 und 2 in Offenlage,
- Fig. 4: eine weitere Alternative des Verschlusses gemäß Fig. 1,
- Fig. 5: eine Seitenansicht eines erfindungsgemäßen Behälters mit Verschluss,
- Fig. 6: ein Teil einer Untersuchungseinrichtung mit Verschlüssen gemäß Fig. 1 bis 3 in Draufsicht,
- Fig.7: die Untersuchungseinrichtung gemäß Fig. 6 in Seitenansicht,
- Fig. 8: ein weiteres Ausführungsbeispiel eines erfindungsgemäßen Verschlusses in Ansicht gemäß Fig. 1,
- Fig. 9a: einen erfindungsgemäßen Verschluss gemäß Fig. 8 in Schließlage und eine Entnahmeeinheit,
- Fig. 9b: der Verschluss und die Entnahmeeinheit gemäß Fig. 9a, wobei die Verbindungsmittel und Gegenverbindungsmittel miteinander in Wirkverbindung stehen,
- Fig. 9c: die Entnahmeeinheit und der Verschluss gemäß Fig. 9b, wobei der Verschluss in Offenlage ist,
- Fig. 10a: ein weiteres Ausführungsbeispiel eines Verschlusses mit Behälter in Draufsicht in Schließlage,
- Fig. 10b: der Behälter mit Verschluss gemäß Fig. 10a in Seitenansicht,
- Fig. 11a: der Behälter mit Verschluss gemäß Fig, 10a in Offenlage,
- Fig. 11b: der Behälter mit Verschluss gemäß Fig. 10b in Offenlage,
- Fig. 12a: eine weitere Ausführungsform eines erfindungsgemäßen Verschlusses mit Behälter in Schließlage,
- Fig. 12b: der Verschluss gemäß Fig. 12a in Offenlage,
- Fig. 13a: noch eine Ausführungsform eines erfindungsgemäßen Verschlusses mit Behälter in Seitenansicht in Schließlage,
- Fig. 13b: der erfindungsgemäße Verschluss gemäß Fig. 13a in Offenlage,
- Fig. 13c: das Loselement des erfindungsgemäßen Verschlusses gemäß Fig. 13a und b in Ansicht von unten,
- Fig. 13d: das Fixelement des erfindungsgemäßen Verschlusses gemäß Fig. 13a und b in Draufsicht,
- Fig. 13e: das Fixelement aus Fig. 13d in Seitenansicht.

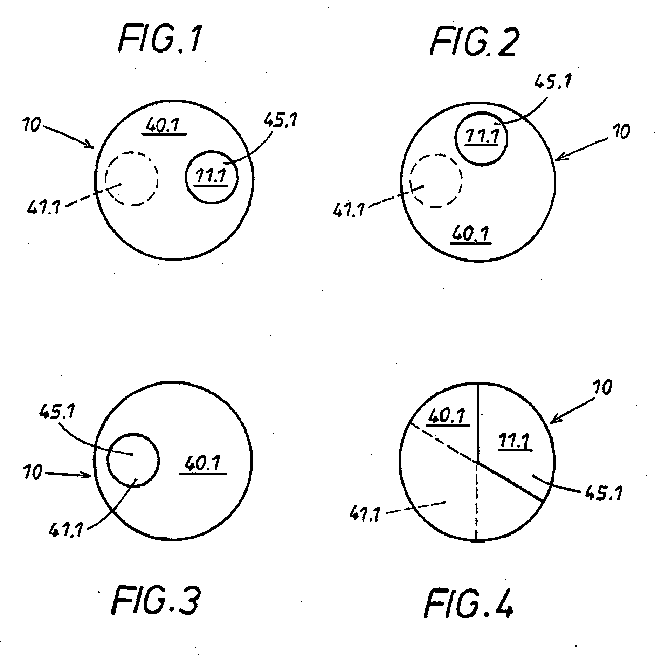

Die Fig. 1 bis 3 zeigen eine erste Ausführungsform eines erfindungsgemäßen Verschlusses 10. Man erkennt das Loselement 40.1, welche eine Öffnung 45.1 aufweist. Dieses Loselement 40.1 ist in Bezug auf das darunter befindliche Fixelement 11.1 drehbar gelagert. Das Fixelement 11.1 ist an dem hier nicht näher dargestellten Behälter 20 ortsfest befestigt. Das Fixelement 11.1 weist ebenfalls eine Öffnung 41.1, in Fig. 1 und 2, gestrichelt dargestellt, auf. Durch Drehung des Loselementes 40.1 werden die beiden Öffnungen 41.1 und 45.1 in eine miteinander fluchtende Lage gebracht, wie aus Fig. 3 zu erkennen. Es ist auch möglich, nur eine teilweise fluchtende Lage der Öffnungen 41.1 und 45.1 vorzusehen. Ebenfalls müssen beide Öffnungen nicht die gleiche Größe und Form aufweisen.

Fig. 4 zeigt nunmehr eine zweite Ausführungsform des erfindungsgemäßen Verschlusses 10 gemäß Fig. 1. Die Öffnungen 41.1 und 45.1 sind hier kreissektorförmig. Durch Drehen des Loselementes 40.1 können auch hier die beiden Öffnungen 41.1 und 45.1 in eine zumindest teilweise miteinander fluchtende Lage gebracht werden.

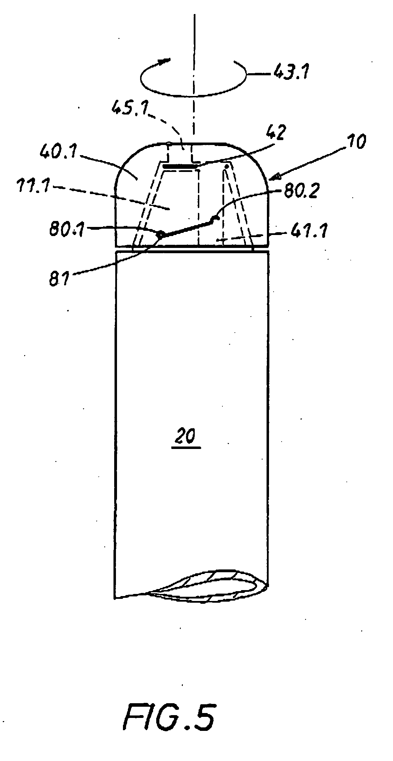

Fig. 5 zeigt nunmehr einen erfindungsgemäßen Behälter 20 mit erfindungsgemäßem Verschluss 10. Auch dieser Verschluss 10 besitzt ein Fixelement 11.1 sowie ein Loselement 40.1. Beide Elemente 11.1, 40.1 weisen Öffnungen 41.1, 45.1 auf. Durch Drehung des Loselementes 40.1 in der Bewegungsrichtung 43.1 kann der erfindungsgemäße Verschluss 10 von der vorliegenden Schließlage in eine Offenlage überführt werden. Die Bewegung des Loselementes 40.1 erfolgt also rotatorisch.

Das Loselement 40.1 verfügt über zwei Anschläge 80.1, 80.2, während das Fixelement 11.1 über einen Gegenanschlag 81 verfügt. In der in Fig. 5 gezeigten Schließlage stehen der erste Anschlag 80.1 und der Gegenanschlag 81 miteinander in Wirkverbindung. Wird das Loselement 40.1 nunmehr entlang seiner Bewegungsrichtung 43.1 bewegt, so kommt der Gegenanschlag 81 mit dem ersten Anschlag 80.1 außer Eingriff und stattdessen mit dem zweiten Anschlag 80.2 in Wirkverbindung. Dies hat den Vorteil, dass der Verschluss nicht unbeabsichtigt, beispielsweise durch Rüttelbewegungen beim Transport des Behälters 20 bzw. in der Untersuchungseinrichtung 30 in seine Offen- bzw. Schließlage überführt wird.

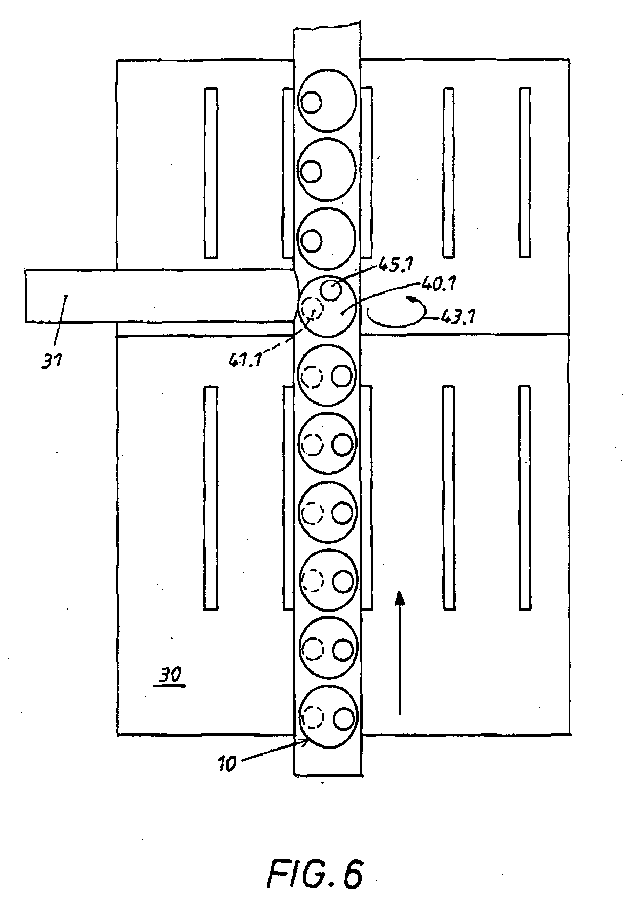

Fig. 6 zeigt einen Teil der Untersuchungseinrichtung 30 bzw. eine der eigentlichen Untersuchungseinrichtung vorgeschaltete Öffnungseinrichtung. Man erkennt deutlich wie mehrere, mit einem erfindungsgemäßen Verschluss 10 gemäß Fig. 1 bis 3 beaufschlagte Behälter 20 in die Untersuchungseinrichtung 30 eingefügt werden. Hier ist ein Betätiger 31 vorgesehen, welcher die jeweiligen Loselemente 40.1 der Verschlüsse 10 in ihrer Drehrichtung 43.1 bewegt, um somit die Öffnung 45.1 des Loselements 40.1 mit der Öffnung 41.1 des Fixelementes 11.1 in eine fluchtende Lage zu bringen. Nach der Entnahme von Probenmaterial aus dem Behälter 20 kann in der Untersuchungseinrichtung 30 bzw. dieser nachgeschaltet, nochmals ein ähnlicher Betätiger 31 vorgesehen sein, um die Verschlüsse 10 wieder in ihre Schließlage zu überführen. Hierzu kann selbstverständlich auch der in Fig. 6 gezeigte Betätiger 31 dienen, wenn man entweder die Loselemente 40.1 noch weiter herumdreht, oder sie in der Betätigungseinrichtung 43.1 entgegengesetzten Richtung am Betätiger 31 vorbeilaufen lässt, bis die Öffnungen 45.1 und 41.1 wieder aus ihrer fluchtenden Lage gebracht werden.

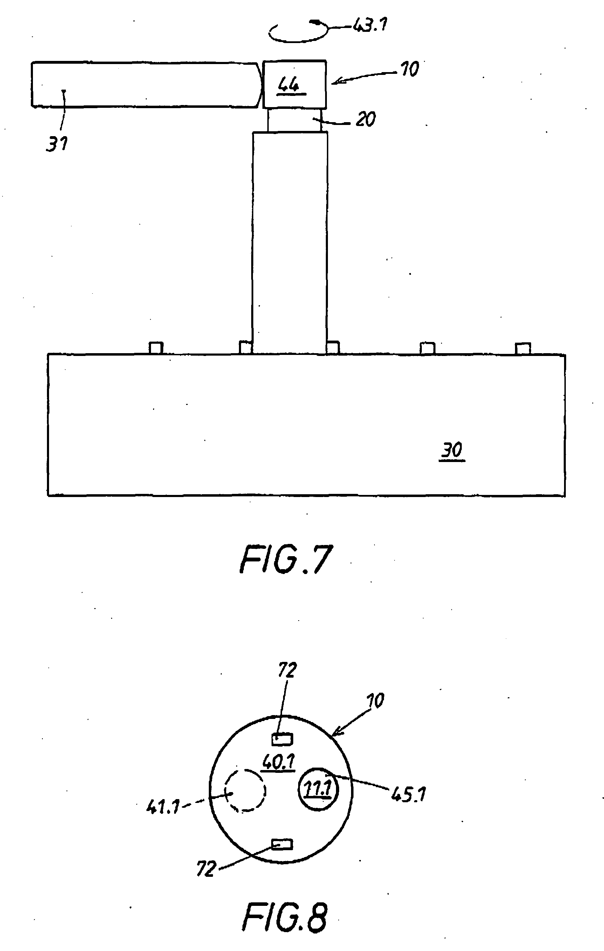

In Fig. 7 ist nochmals ein Behälter 20 mit einem erfindungsgemäßen Verschluss 10 in der bereits in Fig. 6 gezeigten Untersuchungseinrichtung 30 gezeigt. Der Behälter 20 ist hier nochmals in eine zusätzliche Aufnahme eingebracht worden. Die Oberfläche der Außenseite 44 des Loselementes 40.1 am Verschluss 10 ist besonders ausgestaltet, um so durch Reibschluss vom Betätiger 31 in seiner Bewegungsrichtung 43.1 bewegt zu werden. Diese spezielle Oberflächenbeschaffenheit der Außenseite 44 fungiert hier als Mittel zur Betätigung des Verschlusses 10 in der Untersuchungseinrichtung 30.

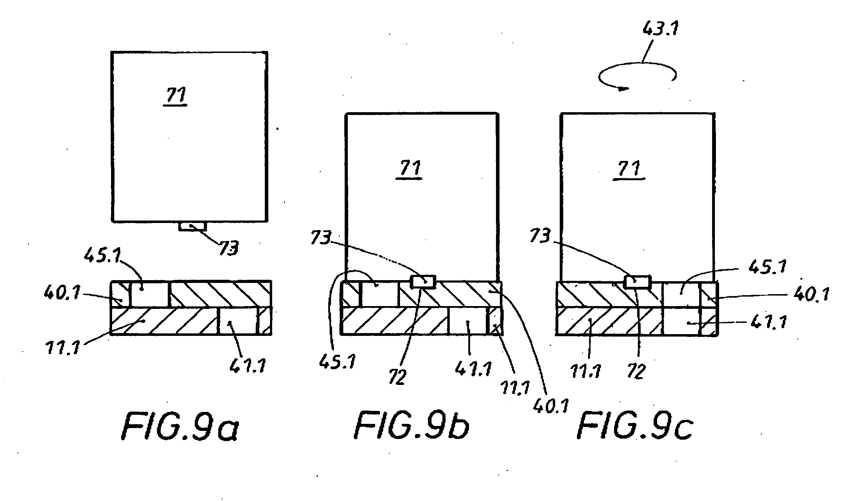

Ein weiteres Ausführungsbeispiel des erfindungsgemäßen Verschlusses 10 ist in Fig. 8 dargestellt. Der Verschluss 10 verfügt wieder über das Fixelement 11.1 sowie das Loselement 40.1 mit den Öffnungen 41.1 bzw. 45.1. Zusätzlich weist der Verschluss 10 auch noch zwei Ausnehmungen 72 auf, welche als Verbindungsmittel dienen, wie aus den Fig. 9a bis 9c näher ersichtlich wird.

Die Fig. 9a bis 9c zeigen eine Entnahmeeinheit 71, welche über Gegenverbindungsmittel, in diesem Falle über Vorsprünge 73, verfügt. Die Entnahmeeinheit 71 enthält den hier nicht näher gezeigten Kanal zur Einführung einer Pipette oder eines sonstigen Bauteils, welches Probenmaterial aus dem geöffneten Behälter 20 entnehmen kann. Der Verschluss 10 besteht wiederum aus einem Fixelement 11.1 sowie einem Loselement 40.1. Beide Elemente 11.1, 40.1 verfügen über Öffnungen 41.1, 45.1, die in den Fig. 9a und 9b in einer nicht fluchtenden Lage sind, so dass der Verschluss 10 in seiner Schließlage ist.

Durch Drehung der Entnahmeeinheit 71 in der Bewegungsrichtung 43.1 wird das Loselement 40.1 so bewegt, dass die Öffnungen 41.1 und 45.1 in eine fluchtende Lage kommen, wie aus Fig. 9c ersichtlich. Die Übertragung der Drehbewegung von der Entnahmeeinheit 71 auf das Loselement 40.1 erfolgt dabei über das Zusammenwirken der als Vorsprünge 73 ausgestalteten Gegenverbindungsmittel mit den als Ausnehmungen 72 gestalteten Verbindungsmitteln. Das Überführen des erfindungsgemäßen Verschlusses 10 zurück in die Schließlage, nachdem Probenmaterial zur Untersuchung entnommen wurde, kann nunmehr wieder über eine Drehung der Entnahmeeinheit 71 entgegen der Bewegungsrichtung 43.1 erfolgen.

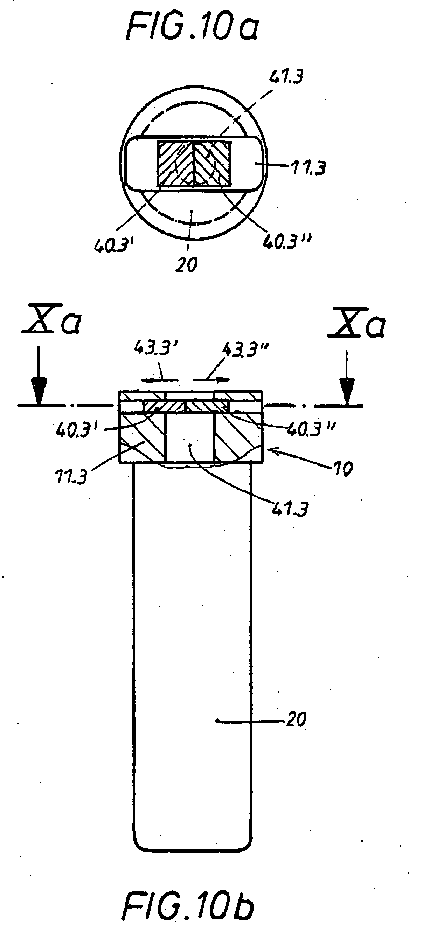

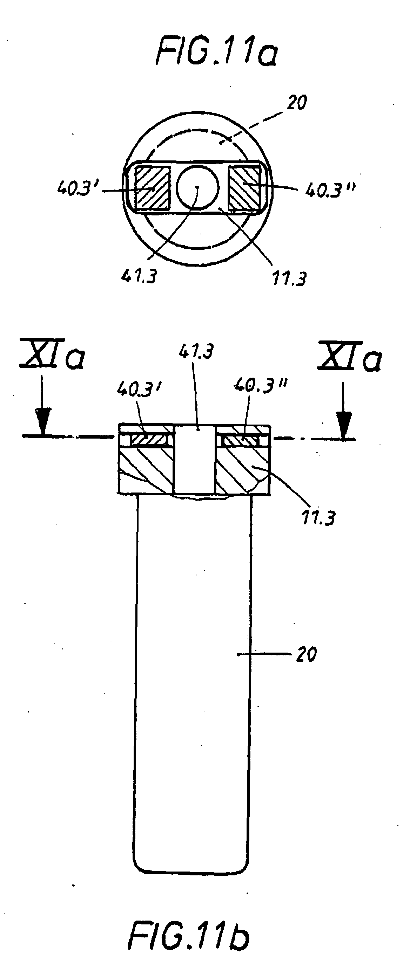

Ein weiteres bevorzugtes Ausführungsbeispiel eines erfindungsgemäßen Verschlusses 10 zeigen die Fig. 10a, 10b sowie 11a, 11b. In den Fig. 10a und 10b befindet sich der dargestellte Verschluss 10 in seiner Schließlage. Das Fixelement 11.3 verfügt hierbei über die Öffnung 41.3. Diese wird in der dargestellten Schließlage von zwei Loselementen 40.3' und 40.3" verschlossen. Die Öffnung 41.3 ist hierbei die einzige Öffnung in die Oberseite des Behälters 20.

Bewegt man nun die Loselemente 40.3' und 40.3" in ihre Bewegungsrichtungen 43.3' und 43.3", so kommt man zu der in den Fig. 11a und 11b gezeigten Offenlage des Verschlusses 10. Die Öffnung 41.3 ist nicht mehr verdeckt und aus dem Behälter 20 kann Probenmaterial entnommen werden.

Die Bewegung der Loselemente 40.3' und 40.3" kann auf mechanischem Wege erfolgen. Es ist jedoch auch möglich, eines oder beide Loselemente ganz oder teilweise aus magnetischem bzw. magnetisierbarem Material herzustellen und durch Anlegen eines Magnetfeldes die in den Fig. 11a und 11b gezeigte Offenlage herbeizuführen. Wird dann der mit dem Verschluss 10 versehene Behälter 20 aus dem Magnetfeld herausgebracht, so bewegen sich die Loselemente 40.3' und 40.3" automatisch wieder in ihre Schließlage, so dass diese mittelbar durch die Untersuchungseinrichtung 30 wieder herbeigeführt wird.

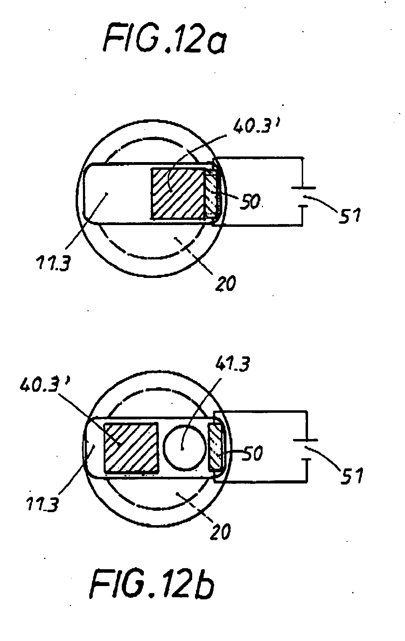

Ein ähnliches Ausführungsbeispiel zeigen die Fig. 12a und 12b. Hier wird die Öffnung 41.3 von dem Loselement 40.3' verschlossen, um die in Fig. 12a dargestellte Schließlage herbeizuführen. Das Loselement 40.3' besteht zumindest teilweise aus einem magnetischen oder magnetisierbaren Material. Hierbei ist es durchaus auch denkbar, dass das Loselement 40.3' mit einer magnetischen bzw. magnetisierbaren Beschichtung versehen ist. Außerdem weist der Verschluss 10 noch den Elektromagneten 50 auf. Wird der Elektromagnet 50 durch die Spannungsquelle 51 mit einer Spannung beaufschlagt, so wird die in Fig. 12b dargestellte Offenlage herbeigeführt und die Öffnung 41.3 liegt frei, so dass Probenmaterial aus dem Behälter 20 entnommen werden kann. Wird nun die am Elektromagneten 50 anliegende Spannung wieder abgeschaltet, so bewegt sich das Loselement 40.3' wieder zurück, so dass die in Fig. 12a dargestellte Schließlage wieder hergestellt wird. Auch hier liegt somit eine mittelbare Betätigung des Verschlusses 10 durch die Untersuchungseinrichtung 30 vor, um die Schließlage wieder herbeizuführen.

In den Fig. 10a, 10b, 11a, 11b und 12a, 12b findet die Bewegung der Loselemente 40,3' und 40.3" translatorisch statt.

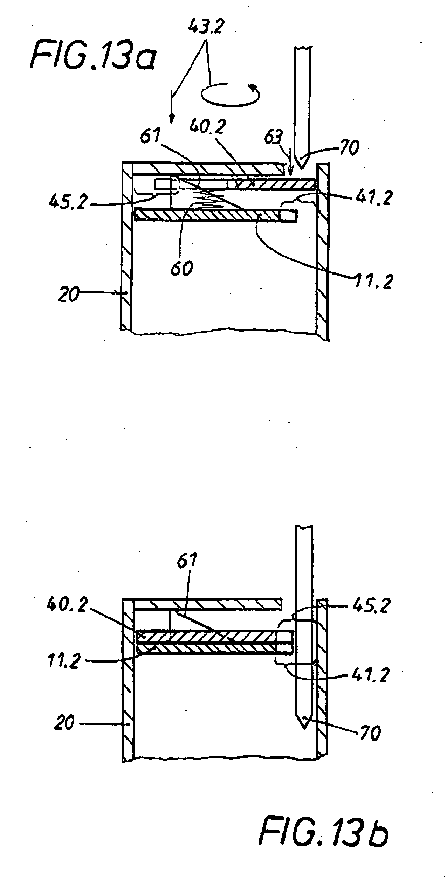

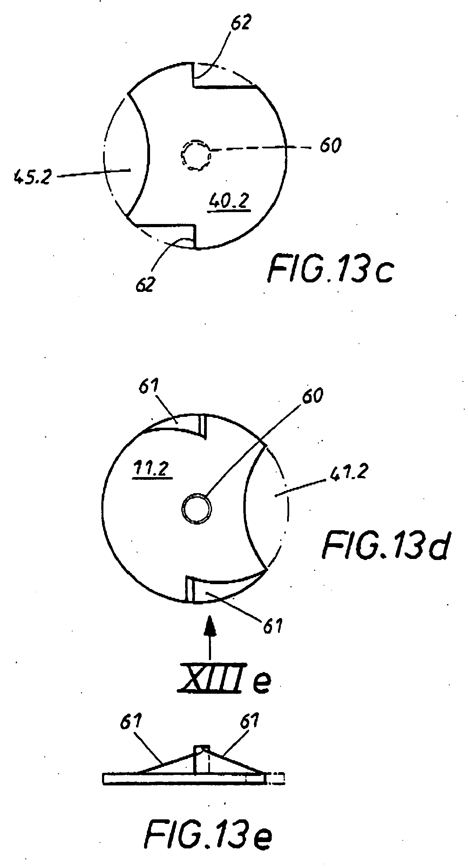

Ein letztes Ausführungsbeispiel zeigen die Fig. 13a bis 13e. Der hier dargestellte Behälter 20 verfügt über ein Fixelement 11.2, welches wiederum eine Öffnung 41.2 aufweist. Darüber angeordnet, ist das Loselement 40.2, welches ebenfalls eine Öffnung 45.2 besitzt. Die Elemente 11.2, 40.2 sind mit einer zwischen ihnen angeordneten Feder 60 beaufschlagt. Weiterhin verfügt das Fixelement 11.2 über Führungskanten 61, welche mit Gegenführungskanten 62 am Loselement 40.2 zusammenwirken können. Diese Führungskanten 61 und Gegenführungskanten 62 dienen als Mittel, welche mit an der Untersuchungseinrichtung 30 befindlichen Betätigungsteilen 70 in Wirkverbindung bringbar sind. Die Führungskanten 61 des Festelementes 11.2 weisen die aus Fig. 13a, 13b und 13e näher ersichtliche Form auf.

Drückt jetzt ein Betätigungsteil der Untersuchungseinrichtung 30, beispielsweise eine Pipettenspitze 70 auf das Loselemeat 40.2, so gleiten die Gegenfuhrungskanten 62 des Loselementes 40.2 an den Führungskanten 61 des Fixelementes 11.2 herab. Durch die Geometrie der Führungskanten 61 und Gegenfuhrungskanten 62 erfolgt dabei eine sowohl translatorische als auch rotatorische Bewegung des Loselementes 40.2. und zwar in Richtung 43.2. Hierdurch kommen die Öffnungen 41.2 und 45.2 in die aus Fig. 13b ersichtliche fluchtende Lage und die Pipettenspitze 70 kann Probenmaterial aus dem Behälter 20 entnehmen. Wird nach erfolgter Probenentnahme die Pipettenspitze 70 wieder aus dem Behälter 20 zurückgezogen, so wird durch die Federbelastung 60 das Loselement 40.2 wieder in seine aus Fig. 13a ersichtliche Lage gebracht und die Schließlage des Verschlusses 10 wieder herbeigeführt. Auch hier erfolgt somit die Überführung in die Schießlage mittelbar durch die Untersuchungseinrichtung 30.

Abschließend sei noch darauf hingewiesen, dass die hier dargestellten Ausführungsformen lediglich beispielsweise Verwirklichungen der Erfindung sind. Diese ist nicht darauf beschränkt. Es sind vielmehr noch Abänderungen und Abwandlungen möglich.

### Bezugszeichenliste:

- 10: Verschluss
- 11.1: Fixelement
- 11.2: Fixelement (Fig. 13)
- 11.3: Fixelement 1 (Fig. 10, 11, 12)
- 20: Behälter
- 30: Untersuchungseinrichtung
- 31: Betätiger
- 40.1: Loselement
- 40.2: Loselement (Fig. 13)
- 40.3': Loselement 1 (Fig. 10, 11,12)
- 40.3": Loselement 2 (Fig. 10, 11, 12)
- 41.1: Öffnung in 11.1
- 41.2: Öffnung in 11.2
- 41.3: Öffnung in 11.3
- 42: Dichtung
- 43.1: Bewegungsrichtung von 40.1
- 43.2: Bewegungsrichtung von 40.2
- 43.3': Bewegungsrichtung von 40.3'
- 43.3": Bewegungsrichtung von 40.3"
- 44: Außenseite von 40.1 (Fig. 6, 7)
- 45.1: Öffnung in 40.1
- 45.2: Öffnung in 40.2
- 50: Elektromagnet
- 51: Spannungsquelle
- 60: Feder
- 61: Führungskante
- 62: Gegenführungskante
- 63: Druck
- 70: Pipettenspitze
- 71: Entnahmeeinheit
- 72: Verbindungsmittel, Ausnehmung
- 73: Gegenverbindungsmittel, Vorsprung
- 80.1: Erster Anschlag
- 80.2: Zweiter Anschlag
- 81: Gegenanschlag

## Patentansprüche

1. Verschluss für einen Behälter (20) zur Aufnahme von Proben, insbesondere von biologischen Proben, der zur Einbringung in eine Untersuchungseinrichtung geeignet ist,
wobei der Verschluss (10) auf den Behälter (20) montierbar ist und wenigstens ein in Bezug auf den Behälter (20) bewegliches Loselement (40.3', 40.3") aufweist,
wobei der Verschluss (10) eine Schließlage besitzt, in der er den Behälter (20) verschließt um die Probe gegenüber der Umgebung zu sichern, und eine Offenlage besitzt, in der die Probe zugänglich ist,
wobei der Verschluss (10) in seiner Offenlage auf dem Behälter (20) verbleibt,
und wobei der Verschluss (10) reversibel in seine Offenlage überführbar ist,
**dadurch gekennzeichnet,**
**dass** wenigstens eines der Loselemente (40.3', 40.3") zumindest bereichsweise aus einem magnetischen oder magnetisierbaren Material besteht wobei das Überführen in die Offen- und / oder in die Schließlage durch auf das bzw. die Loselemente (40.3', 40.3") einwirkende Magnetkräfte erfolgt.

2. Verschluss nach Anspruch 1, **dadurch gekennzeichnet, dass** zur Erzeugung der Magnetkraft eine oder mehrere Elektromagneten (50) vorgesehen sind.

3. Verschluss nach einem der Ansprüche 1 oder 2, **dadurch gekennzeichnet, dass** eines oder mehrere Fixelemente (11.3) vorgesehen sind, die ortsfest am Behälter (20) angeordnet sind.

4. Verschluss nach einem der Ansprüche 1 bis 3, **dadurch gekennzeichnet, dass** nur eines bzw. einige der Fixelemente (11.3) wenigstens je eine Öffnung (41.3) aufweisen, die in der Schließlage von dem oder den Loselementen (40.3', 40.3") verdeckt werden.

5. Verschluss nach einem der Ansprüche 1 bis 4, **dadurch gekennzeichnet, dass** die Bewegung (43.3', 43.3") des bzw. der Loselemente (40.3', 40.3"), mit welcher der Verschluss (10) in seine Offenlage und / oder seine Schließlage überführbar ist, translatorisch und / oder rotatorisch erfolgt.

6. Verschluss nach einem der Ansprüche 1 bis 5, **dadurch gekennzeichnet, dass** zwischen dem Fixelement (11.3) und den Loselementen (40.3', 40.3") eine Dichtung vorgesehen ist.

7. Behälter zur Aufnahme von flüssigen Proben, insbesondere von biologischen Proben, mit einem Verschluss (10) nach einem der Ansprüche 1 bis 6.
